# EUROPÄISCHE PATENTANMELDUNG

(11) **EP 2 706 086 A1**
(43) Veröffentlichungstag der Anmeldung: **12.03.2014**
(21) Anmeldenummer: 12183191.1
(22) Anmeldetag: 05.09.2012
(51) Int. Cl.: C08J 9/12, C08J 9/14

(54) **Verfahren zur Herstellung von Schaumstoffplatten niedriger Dichte durch Extrusion von Styrolpolymeren unter Verwendung von Hydrofluorolefinen als Treibmittel**

(71) Anmelder: BASF SE, 67056 Ludwigshafen (DE)
(72) Erfinder: Sommer, Maria-Kristin, 67157 Wachenheim (DE); Diehlmann, Tim, 67269 Grünstadt (DE); Dietzen, Franz-Josef, 67454 Hassloch (DE); Merkel, Peter, 67308 Zellertal (DE); Hahn, Christoph, 67435 Neustadt (DE); Schall, Herbert, 67354 Römerberg (DE); Kiciak, Thomas, 67071 Ludwigshafen (DE)

(57) **Zusammenfassung**

Ein Verfahren zur Herstellung von Schaumstoffplatten mit einer Dichte im Bereich von 20 bis 45 kg/m³, umfassend die Stufen:
a. Erzeugen einer Polymerschmelze aus einem Styrolpolymeren oder Mischungen von Styrolpolymeren,
b. Einbringen von 0 bis 5 Gew.-%, bezogen auf die Polymerschmelze, eines IR-Absorbers und 0 bis 10 Gew.-%, bezogen auf die Polymerschmelze, einer bromierten, organischen Verbindung als Flammschutzmittel, sowie gegebenenfalls weiteren Zusatzstoffen, wie Nukleierungsmittel oder Weichmacher,
c. Einbringen von 1 bis 12 Gewichtsanteilen pro 100 Gewichtteile der in Stufe (a) und (b) erzeugten Polymerschmelze einer Treibmittelmischung, welche aus 5 bis 70 Gew.-% eines oder mehrerer Hydrofluorolefine und 95 bis 30 Gew.-% eines oder mehrerer Cotreibmittel besteht, zur Ausbildung einer schäumbaren Schmelze,
d. Extrusion der schäumbaren Schmelze in einen Bereich niedrigeren Drucks unter Aufschäumen zu dem Extrusionsschaumstoff.

## Beschreibung

Die Erfindung betrifft ein Verfahren zur Herstellung von Schaumstoffplatten mit einer Dichte von 20 bis 45 kg/m³ durch Extrusion unter Verwendung von Hydrofluorolefinenen (HFO) als Treibmittelkomponente.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Gleichzeitig ist es wünschenswert, dass die Platten niedrige Dichten aufweisen und die gültigen Brandvorschriften erfüllen.

Kürzlich wurden aus Umweltschutzgründen zur Herstellung von XPS-Platten teilflourierte Alkene als Treibmittel (HFO) entwickelt, die besonders niedrige GWP-Werte (Global Warming Potential) aufweisen. Dieser Begriff umfasst eine ganze Gruppe von Substanzen, von denen einige als Treibmittel bei der Herstellung von Polymerschäumen verwendet werden können. Diese Treibmittel zeichnen sich dadurch aus, dass sie im gasförmigen Zustand niedrige Wärmeleitfähigkeiten haben und die Herstellung von Schaumstoffplatten mit guten Wärmedämmeigenschaften ermöglichen. Hydroflourolefine (HFO) enthaltende Treibmittelmischungen und deren Verwendung zur Herstellung von Extrusionsschaumstoffen sind beispielsweise beschrieben in WO 2008/121778, WO 2008/121779 und WO 2008/130919.

Trotz der niedrigen GWP Werte dieser neuen Gruppe möglicher Treibmittel, werden fluorhaltige Kohlenwasserstoffe in der Gesellschaft kritisch gesehen. Als neu entwickelte Stoffe ist auch eine abschließende Beurteilung im Hinblick auf alle Bewertungskriterien noch nicht möglich. Deshalb ist es unter Umweltgesichtspunkten auch weiterhin wünschenswert diese Stoffe in möglichst geringen Umfang einzusetzen. Gleichzeitig ist es aber auch im Hinblick auf immer weiter steigende Forderungen zu Energieeinsparung wichtig, möglichst gute Wärmedämmeigenschaften zu erreichen.

In der Offenlegungsschrift DE 10 2010 011 966 A1 wird ein Verfahren zur Herstellung von Polystyrol-Schaumstoffplatten beschrieben, bei dem Polystyrol mit mindestens 5 Gew.-% und maximal 12 Gew.-% HFO als Treibmittel und gegebenenfalls weiteren Co-Treibmitteln, wie Wasser, Kohlendioxid oder Aceton und Talk als Nukleierungsmittel extrudiert und aufgeschäumt wird.

In der WO 2010/088320 werden Treibmittelmischungen aus Tetrafluorpropen (HFO) und mindestenens einem Co-Treibmittel, ausgewählt aus Wasser, Kohlendioxid, Alkanen, 1,1-Diflourethan und Alkohol oder Mischungen davon, beschrieben und deren Verwendung zur Herstellung von Extrusionsschaumstoffplatten. Als Tetrafluorpropen werden insbesondere cis- und/oder trans- 1,3,3,3-tetrafluoropropene (HFO-1234ze), 2,3,3,3-tetrafluoropropene (HFO 1234yf), oder Mischungen davon eingesetzt. Die in den Beispielen beschriebenen Schaumstoffe weisen jedoch Dichten über 50 g/l auf oder bestehen nicht die Brandtests nach EN ISO 11925-2 (Brandklasse E).

Aufgabe der vorliegenden Erfindung war es, den genannten Nachteilen abzuhelfen und ein Verfahren zur Herstellung von Styrolpolymer-Extrusionsschaumstoffen mit geringer Wärmeleitfähigkeit und niedriger Schaumdichte bereitzustellen. Die Extrusionsschaumstoffe sollten außerdem die Brandtests nach DIN 4102 (B2-Test) sowie nach EN ISO 11925-2 (Brandklasse E) bestehen.

Die Aufgabe wurde durch ein Verfahren zur Herstellung von Schaumstoffplatten mit einer Dichte im Bereich von 20 bis 45 kg/m³, umfassend die Stufen:
a. Erzeugen einer Polymerschmelze aus einem Styrolpolymeren oder Mischungen von Styrolpolymeren,
b. Einbringen von 0 bis 5 Gew.-%, bezogen auf die Polymerschmelze, eines IR-Absorbers und 0 bis 10 Gew.-%, bezogen auf die Polymerschmelze, einer organischen Bromverbindung als Flammschutzmittel, sowie gegebenenfalls weiteren Zusatzstoffen, wie Nukleierungsmittel oder Weichmacher,
c. Einbringen von 1 bis 12 Gewichtsanteilen pro 100 Gewichtteile der in Stufe (a) und (b) erzeugten Polymerschmelze einer Treibmittelmischung, welche aus 5 bis 70 Gew.-% eines oder mehrerer Hydrofluorolefine und 95 bis 30 Gew.-% eines oder mehrerer Cotreibmittels besteht, zur Ausbildung einer schäumbaren Schmelze,
d. Extrusion der schäumbaren Schmelze in einen Bereich niedrigeren Drucks unter Aufschäumen zu dem Extrusionsschaumstoff, gelöst.

In Stufe (a) des Verfahrens wird eine Polymerschmelze aus einem Styrolpolymeren oder Mischungen von Styrolpolymeren erzeugt. Unter Ausbildung einer Polymerschmelze wird im Rahmen der Erfindung eine Plastifizierung der Polymerkomponenten im weiteren Sinne verstanden, d.h. die Überführung der festen Bestandteile der Polymerkomponenten in einen verformbaren oder fließfähigen Zustand. Dazu ist es notwendig, dass die Polymerkomponenten auf eine Temperatur oberhalb der Schmelz- beziehungsweise Glasübergangstemperatur erhitzt werden. Geeignete Temperaturen betragen im Allgemeinen mindestens 150°C, bevorzugt 160 bis 290°C, besonders bevorzugt 180 bis 240°C.

Als Styrolpolymere können Polystyrol oder Styrolcopolymere eingesetzt werden. Die Styrolcopolymeren enthalten bevorzugt mindestens 50 Gew.-% Styrol einpolymerisiert. Als Comonomere kommen z.B. α-Methylstyrol, kernhalogenierte Styrole, kernalkylierte Styrole, Acrylnitril, Ester der (Meth)acrylsäure von Alkoholen mit 1 bis 8 C-Atomen,N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat in Betracht. Geeignete Styrolcopolymere sind beispielsweise Styrol-Acrylnitril-Copolymeren (SAN), Styrol-Maleinsäureanhydrid-Copolymere (SMA), Styrol-Phenylmaleinsäureimid-Copolymere (SPMI), Styrol-Maleinsäureanhydrid-Phenylmaleinimid-Terpolymere (SMAPMI), Styrol-Acrylnitril-Maleinsäureanhydrid-Terpolymeren (SANMA) oder Mischungen davon. Bevorzugt wird Polystyrol eingesetzt.

In Stufe (b) können der Polymerschmelze 0 bis 5 Gew.-%, bevorzugt 0,1 bis 2 Gew.-%, bezogen auf die Polymerschmelze, eines IR-Absorbers und 0 bis 10 Gew.-%, bevorzugt 0,1 bis 2 Gew.-%, bezogen auf die Polymerschmelze, einer bromierten, organischen Verbindung als Flammschutzmittel, sowie gegebenenfalls weiteren Zusatzstoffen, wie Nukleierungsmittel oder Weichmacher zugegeben werden.

Zur Verbesserung der Wärmedämmung ist insbesondere die Zugabe von IR-Absorbern, wie, Graphit, Ruß, Aluminiumpulver, Titandioxid, Indoanilin-Farbstoffe, Oxonol-Farbstoffe, Anthrachinon-Farbstoffe oder Mischungen davon, geeignet. Geeignete Teilchengrößen für IR-Absorber liegen im Bereich von 0,01 bis 50 µm, bevorzugt im Bereich von 2 bis 10 µm. Vorzugsweise wird als IR-Absorber Graphit zugeben mit einer Teilchengrößenverteilung die folgendermaßen charakterisiert werden kann: d50 < 12 µm; d90 < 30 µm, besonders bevorzugt; d50 < 6 µm; d90 < 15 µm. Besonders bevorzugt wird als IR-Absorber 0,1 bis 2 Gew.-% Graphit eingesetzt

Aufgrund der Brandschutzbestimmungen in der Bauindustrie und anderen Branchen werden in der Regel ein oder mehrere Flammschutzmittel zugegeben.

Als Flammschutzmittel werden vorzugsweise 0,5 bis 5 Gew.-% , bezogen auf die Polymerschmelze, einer organischen Bromverbindungen mit einem Bromgehalt von mehr als 50 Gew.-%, insbesondere im Bereich von 60 bis 80 Gew.-%, wie z.B. Hexabromcyclododecan, vorzugsweise zusammen mit 0,1 bis 0,5 Gew.-% einer C-C- oder O-O-labilen organischen Verbindung, wie Dicumylperoxid oder bevorzugt Dicumyl als Flammschutzsynergist zugegeben.

Bevorzugt wird als Flammschutzmittel 0,5 bis 5 Gew.-%, bezogen auf die Polymerschmelze, Hexabromcyclododecan (HBCD), eingesetzt, insbesondere die technischen Produkte, welche im Wesentlichen das α-, β- und γ-Isomer und vorzugsweise einen Zusatz von Dicumyl (2,3-Dimethyl-2,3-diphenylbutan) als Synergisten enthalten.

Als Flammschutzmittel können auch bromhaltige, polymere Flammschutzmittel, alleine oder mit entsprechenden Stabilisatoren und Synergisten verwendet werden. Diese polymeren Flammschutzmittel enthalten in der Regel mehr als 50 Gew.-%, insbesondere 60 bis 80 Gew.-% Brom. Bevorzugt werden bromhaltige, polymere Flammschutzmittel ebenfalls in Mengen von 0,5 bis 5 Gew.-%, bezogen auf die Polymerschmelze, eingesetzt.

Als Flammschutzmittel eingesetzte halogenhaltige Polymere weisen bevorzugt ein mittleres Molekulargewicht im Bereich von 5.000 bis 300.000, insbesondere 20.000 - 150.000, bestimmt mittels Gelpermeationschromatographie (GPC) auf. Bevorzugt weisen die halogenierten Polymeren in der thermogravimetrischen Analyse (TGA) einen Gewichtsverlust von maximal 5 Gew.-% bis zu einer Temperatur von 250°C, bevorzugt bei einer Temperatur bis 270°C und besonders bevorzugt bis zu einer Temperatur von 370°C auf.

Bevorzugte halogenierte Polymere als Flammschutzmittel sind bromiertes Polystyrol oder Styrol-Butadien-Blockcopolymere mit einem Bromgehalt im Bereich von 60 bis 80 Gew.-%

Weitere geeignete halogenierte Polymere als Flammschutzmittel sind Polymere, welche Tetrabrombisphenol-A-Einheiten (TBBPA) aufweisen, beispielsweise Tetrabrombisphenol-A-Diglycidylether- Verbindungen.

Als Flammschutzsynergist können zusätzlich zum Flammschutzmittel 0,5 bis 4 Gew.-%, bevorzugt 1,5 bis 3 Gew.-%, bezogen auf die Polymerschmelze, Antimontrioxid , Dicumyl, Dicumylperoxid oder Mischungen davon.

Zusätzlich oder anstelle der halogenierten Flammschutzmittel können auch halogenfreie Flammschutzmittel, beispielsweise Blähgraphit, roter Phosphor, Triphenylphosphat und 9,10-Dihydro-9-oxa-10-phosphaphenanthren-10-oxid eingesetzt werden. Geeignete phosphorhaltige Flammschutzmittel sind beispielsweise beschrieben in WO 2011/029901, WO 2011/083009 oder WO 2012/089667 beschrieben.

Als weitere übliche Zusatz- und/oder Hilfsstoffe können der Polymerschmelze Antistatika, Stabilisatoren, Farbstoffe, Fließverbesserer, Füllstoffe und Keimbildner, in üblichen Mengen zugesetzt werden.

Als Nukleierungsmittel können feinteilige, anorganische Feststoffe wie Talkum, Metalloxide, Silikate oder Polyethylenwachse in Mengen von im Allgemeinen 0,1 bis 10 Gew.-%, bevorzugt 1 bis 3 Gew.-%, bezogen auf die Polymerschmelze, eingesetzt werden. Der mittlere Teilchendurchmesser des Nukleierungsmittels liegt in der Regel im Bereich von 0,01 bis 100 µm, bevorzugt 1 bis 60 µm. Ein besonders bevorzugtes Nukleierungsmittel ist Talkum.

Geeignete Weichmacher sind Fettsäureester, Fettsäureamide und Phthalate, die in Mengen von 0,05 bis 10 Gew.-%, bezogen auf die Polymerschmelze, eingesetzt werden können.

Stufe (c) des erfindungsgemäßen Verfahrens umfasst das Einbringen von 1 bis 12 Gewichtsanteilen, bevorzugt 3 bis 11 Gewichtsanteilen pro 100 Gewichtsteile der in Stufe (a) und (b) erzeugten Polymerschmelze einer Treibmittelmischung, welche aus 5 bis 70 Gew.-%, bevorzugt 20 bis 50 Gew.-% eines oder mehrerer Hydrofluorolefine und 30 bis 95 Gew.-%, bevorzugt 50 bis 80 Gew.-% eines Cotreibmittels besteht, zur Ausbildung einer schäumbaren Schmelze.

Die Wahl geeigneter Treibmittel und Treibmittelzusammensetzungen spielt eine entscheidende Rolle während der Plattenherstellung und für die Eigenschaften der geschäumten Materialien. Die Verwendung von Kohlendioxid als einzigem Treibmittel führt aufgrund der hohen Diffusionsgeschwindigkeit von Kohlendioxid und den begrenzten Löslichkeiten bei den vergleichsweise hohen Verarbeitungstemperaturen zu starker Nukleierung und zum raschen Entweichen aus der Schaumstruktur.

Bevorzugt werden als Hydroflourolefine HFO-1243zf, (cis/trans)-HFO-1234ze, HFO-1234yf, and (E/Z)-HFO-1225ye, HFO-1345zfc, HFO-1336mzz-Z, HFO-1447fz, HFO-1438mzz-E oder Mischungen davon eingesetzt. Diese werden bevorzugt in Mengen von 2 bis 6, bevorzugt 3 bis 5 Gewichtsanteile pro 100 Gewichtsteile der in Stufe (a) und (b) erzeugten Polymerschmelze, eingesetzt.

Als Cotreibmittel werden bevorzugt Ethanol, Aceton, Kohlendioxid, Alkane, Cycloalkane, Fluorchloralkane (HFC), Methylformiat, Wasser oder Mischungen davon eingesetzt werden. Um den Brandtest B2 gemäß DIN 4102 zu bestehen, sollten Alkane und Cycloalkane zu insgesamt höchstens 2 Gewichtsteilen, bevorzugt 0,1 bis 1,0 Gewichtsteilen, pro 100 Gewichtsteile der in Stufe (a) und (b) erzeugten Polymerschmelze eingesetzt werden.

Als Cotreibmittel sind besonders bevorzugt Mischungen von Kohlendioxid und Ethanol als auch Mischungen von Kohlendioxid, Ethanol und iso-Butan.

Die Treibmittel und Cotreibmittel werden bevorzugt in den nachfolgenden genannten Gewichtsanteilen eingesetzt, wobei sich die Gewichtsanteile pro 100 Gewichtsteile der in Stufe (a) und (b) erzeugten Polymerschmelze beziehen.
(1) 0,5 bis 10 Gewichtsteile Hydroflourolefine,
(2) 0,5 bis 10 Gewichtsteile Ethanol, Aceton, Kohlendioxid oder Mischungen davon,
(3) 0 bis 2 Gewichtsteile C₁-C₅ Alkane oder Cylcoalkane

Besonders bevorzugt wird eine Treibmittemischung aus
(1) 3 bis 5,5 Gewichtsteilen Hydroflourolefin,
(2) 1,5 bis 3,5 Gewichtsteilen Ethanol, Aceton, Kohlendioxid oder Mischungen davon,
(3) 0,1 bis 1,0 Gewichtsteilen Isobutan,
jeweils bezogen auf 100 Gewichtsteile der in Stufe (a) und (b) erzeugten Polymerschmelze, eingesetzt.

Die erfindungsgemäß eingesetzten Treibmittel und Co-Treibmittel führen insbesondere bei hohen Plattendicken zu besseren Oberflächen und Dimensionsstabilität. Die Anwesenheit von Ethanol bzw. Aceton bzw. Alkanen ermöglicht eine stärkere Plastifizierung während der Schmelzeverarbeitung und Kalibrierung.

In den Treibmitteln und Co-Treibmitteln kann Wasser enthalten sein. Wasser gelangt in die Treibmittelkomponente vor allem durch die Verwendung von technischen Chemikalien. In einer bevorzugten Ausführungsform sind die Treibmittel im Wesentlichen wasserfrei. Bevorzugt weist die Polymerschmelze nach Stufe b) einen Wassergehalt von maximal 1 Gew.-%, besonders bevorzugt von weniger als 0,1 Gew.-% auf.

Die Treibmittelmischung kann in die Polymerschmelze durch dem Fachmann bekannte Methode eingebracht werden. Geeignet sind beispielsweise Extruder oder Mischer (zum Beispiel Kneter). In einer bevorzugten Ausführungsform wird das Treibmittel mit den geschmolzenen Polymerkomponenten unter erhöhtem Druck gemischt. Der Druck muss dabei so hoch sein, dass im Wesentlichen ein Aufschäumen des geschmolzenen Polymermaterials verhindert und eine homogene Verteilung der Treibmittelkomponenten in der Polymerschmelze erreicht wird. Geeignete Drücke sind 50 bis 500 bar (absolut), bevorzugt 75 bis 300 bar (absolut), besonders bevorzugt 100 bis 250 bar (absolut).

Die Temperatur in Stufe (b) des erfindungsgemäßen Verfahrens muss so gewählt sein, dass das polymere Material im geschmolzenen Zustand vorliegt. Dazu ist es notwendig, dass die Styrolpolymeren auf eine Temperatur oberhalb der Glasübergangstemperatur erhitzt werden. Geeignete Temperaturen betragen im Allgemeinen mindestens 150 °C, bevorzugt 160 bis 290 °C, besonders bevorzugt180 bis 240 °C. Stufe (b) kann kontinuierlich oder diskontinuierlich durchgeführt werden, bevorzugt wird Stufe (b) kontinuierlich durchgeführt.

Die Zugabe der Treibmittel kann im Aufschmelzextruder (Primärextruder) oder in einer nachgelagerten Stufe erfolgen. Bevorzugt erfolgt die Zugabe der Treibmittel direkt im Aufschmelzextruder.

In einer bevorzugten Ausführungsform wird die Erzeugung der schäumbaren Polymerschmelze in dem Fachmann bekannten XPS-Extrudern durchgeführt, beispielsweise über einen Tandem-Aufbau aus Aufschmelzextruder (Primärextruder) und Kühlextruder (Sekundärextruder). Das Verfahren kann kontinuierlich und diskontinuierlich durchgeführt werden, wobei die Styrolpolymeren im Primärextruder aufgeschmolzen werden (Stufe (a)) und die Zugabe des Treibmittels (Stufe (c)) zur Ausbildung einer schäumbaren Schmelze ebenfalls im Primärextruder erfolgt. Die Einmischung und Lösung des Treibmittels kann auch über statische Mischorgane nach Stufe (b) erfolgen, beispielsweise durch statische Mischer.

Stufe (c) des erfindungsgemäßen Verfahrens umfasst das Aufschäumen der schäumbaren Schmelze, um einen Extrusionsschaumstoff zu erhalten. Dazu wird die mit Treibmittel versehene schäumbare Schmelze im Sekundärextruder auf eine für das Schäumen geeignete Temperatur gekühlt. Zudem kann das Kühlen der Schmelze teilweise oder vollständig durch statisch arbeitende Schmelzekühler, beispielsweise statische Wärmetauscher (z.B. verfügbar von Fa. Fluitec oder Fa. Sulzer) erfolgen.

Die Schmelze wird dazu durch eine geeignete Vorrichtung, beispielsweise eine Schlitzdüse, gefördert. Die Schlitzdüse wird mindestens auf die Temperatur der treibmittelhaltigen Polymerschmelze beheizt. Bevorzugt liegt die Temperatur der Düse bei 50 bis 230°C. Besonders bevorzugt liegt die Temperatur der Düse bei 60 bis 130°C.

Die treibmittelhaltige Polymerschmelze wird durch die Düse in einen Bereich überführt, in dem ein niedrigerer Druck herrscht als in demjenigen Bereich, in dem die schäumbare Schmelze vor Extrusion durch die Düse gehalten wird. Der niedrigere Druck kann überatmosphärisch oder unteratmosphärisch sein. Bevorzugt ist die Extrusion in einen Bereich mit atmosphärischem Druck.

Stufe (d) wird ebenfalls bei einer Temperatur durchgeführt, bei der das zu schäumende polymere Material in geschmolzenem Zustand vorliegt. Im Allgemeinen bei Temperaturen von 80 bis 170°C, besonders bevorzugt bei 100 bis 140°C. Dadurch, dass die treibmittelhaltige Polymerschmelze in Stufe (d) in einen Bereich überführt wird, in dem ein niedrigerer Druck herrscht, wird das Treibmittel in den gasförmigen Zustand überführt. Durch den großen Volumenanstieg wird die Polymerschmelze ausgedehnt und aufgeschäumt.

Der Druck an der Düse muss ausreichend hoch gewählt werden, um ein vorzeitiges Aufschäumen in der Düse zu vermeiden, dazu sind Drücke von mindestens 50 bar, bevorzugt 60 - 180 bar, besonders bevorzugt 80 - 140 bar geeignet.

Die geometrische Form des Querschnitts der nach dem erfindungsgemäßen Verfahren erhältlichen Extrusionsschaumstoffe wird im Wesentlichen durch die Wahl der Düsenplatte und ggf. durch geeignete Nachfolgeeinrichtungen wie Plattenkalibrierungen, Rollenbahnabzüge oder Bandabzüge bestimmt und ist frei wählbar.

Die Oberflächenqualität hängt bei Verwendung der erfindungsgemäßen Material- und Treibmittelzusammensetzung von der Oberflächentemperatur der Kalibriereinrichtung ab. Oberflächentemperaturen unterhalb von 50 °C führen zu starker Auskühlung der Schaumoberfläche und in der Folge zur Bildung von Längs- und Querrissen als auch zu Dickenunterschieden zwischen Rand und Mitte der Platte. Bevorzugt werden daher Kalibriereinrichtungen eingesetzt, die durch externe Quellen wie Öltemperierungen oder elektrischen Temperierungen beheizt werden können. Die Oberflächentemperaturen betragen bevorzugt mehr als 50 °C, besonders bevorzugt mehr als 100 °C. Bevorzugt ist zudem der Einsatz antihaftender Oberflächen, beispielsweise teflonbeschichtete Metalle oder mit Teflonfolien abgedeckte Metalle.

Die nach dem erfindungsgemäßen Verfahren erhältlichen Extrusionsschaumstoffe weisen bevorzugt einen rechtwinkligen Querschnitt auf. Die Dicke der Extrusionsschaumstoffe wird dabei durch die Höhe des Düsenplattenschlitzes bestimmt. Die Dicke beträgt in der Regel 20 - 300 mm, bevorzugt 20 - 200 mm. Die Breite der Extrusionsschaumstoffe wird durch die Breite des Düsenplattenschlitzes bestimmt. Die Länge der Extrusionsschaumstoffteile wird in einem nachgelagerten Arbeitsschritt durch bekannte dem Fachmann geläufige Verfahren wie Verkleben, Verschweißen, Zersägen und Zerschneiden bestimmt. Insbesondere bevorzugt sind Extrusionsschaumstoffteile mit einer plattenförmigen Geometrie. Plattenförmig bedeutet, dass die Abmessung der Dicke (Höhe) im Vergleich zu der Abmessung der Breite und der Abmessung der Länge des Formteils klein ist.

Die nach dem erfindungsgemäßen Verfahren erhältlichen Extrusionsschaumstoffe weisen bevorzugt eine Zellzahl im Bereich 1 bis 30 Zellen pro mm, bevorzugt von 3 bis 20 Zellen pro mm, insbesondere von 3 bis 25 Zellen pro mm auf.

Die Dichte der nach dem erfindungsgemäßen Verfahren erhältlichen Extrusionsschaumstoffe liegt bevorzugt im Bereich von 20 bis 45 kg/m³, besonders bevorzugt im Bereich von 25 bis 40 kg/m³.

In der Regel weisen die nach dem erfindungsgemäßen Verfahren erhältlichen Extrusionsschaumstoffe eine Druckfestigkeit, gemessen nach DIN EN 826, im Bereich von 0,15 bis 6 N/mm², bevorzugt im Bereich von 0,3 bis 1 N/mm², auf.

Die nach dem erfindungsgemäßen Verfahren erhältlichen Extrusionsschaumstoffe sind bevorzugt geschlossenzellig, d.h. die Zellen sind gemessen nach DIN ISO 4590 zu mindestens 80 %, insbesondere zu 90 -100% geschlossen.

Die nach dem erfindungsgemäßen Verfahren erhältlichen Extrusionsschaumstoffe können mit Flammschutzmitteln so ausgerüstet werden, dass sie beispielsweise die Anforderungen von genormten Brandtests nach DIN 4102 B2, europäischer Einstufung (Class E) und -je nach Zusammensetzung bzw. Zwischenlagerzeit nach der Produktion - nach DIN 4102 B1 erfüllen

Für die Verbesserung der UV-Beständigkeit des Materials, zur Erhöhung der Oberflächenqualität und zur Reduzierung der Oberflächentemperatur können zudem Folienbeschichtungen im Anschluss an die Kalibrierung auf das Material aufgebracht werden. Die Folien enthalten vorzugsweise UV-Stabilisatoren und / oder Licht-Absorber und / oder Reflektoren und / oder Flammschutzmittel in erhöhter Konzentration im Vergleich zum geschäumten Material.

Die nach dem erfindungsgemäßen Verfahren erhältlichen Schaumstoffplatten werden bevorzugt als Isoliermaterial, insbesondere in der Bauindustrie, unter- und oberirdisch, zum Beispiel für Fundamente, Wände, Böden und Dächer verwendet. Die Verwendung als Strukturschaum, insbesondere für Leichtbauanwendungen und als Kernmaterial für Verbundanwendungen ist ebenfalls möglich.

### Beispiele

### Einsatzstoffe:

- PS: Polystyrol
- Graphit: Graphit mit einer Partikelgrößenverteilung mit d₅₀: 4 - 5,5 µm, d₉₀: < 12 µm
- HBCD: Flammschutzbatch mit 46 Gew.-% HBCD in Polystyrol
- PBr: Flammschutzbatch mit 38 Gew.-% eines bromhaltigen, polymeren Flammschutzmittel (Emerald® 3000, Chemtura)
HFO 1234ze
HFO 1336 mzz-Z

Der Brandtest B2 wurde gemäß DIN 4102 an den Schaumstoffplatten durchgeführt. Die Einordnung in Brandklasse E erfolgte gemäß DIN EN 13501-5.

Die Wärmeleitfähigkeit (WLF) wurde an den extrudierten Schaumstoffplatten bei 10°C nach DIN 52612 gemessen.

### Herstellung der Schaumstoffplatten

Die Schaumstoffplatten wurden auf einer Tandemanlage, bestehend aus einem Doppelschneckenextruder und einem Einschneckenkühlextruder, hergestellt. Hierzu wurde Polystyrol, Flammschutzmittelbatch und gegebenenfalls Graphit dem Doppelschneckenextruder zerführt und bei 200°C aufgeschmolzen. Die Treibmittel wurden als Mischung zusammen in den Doppelschneckenextruder eingespritzt. Die treibmittelhaltige Schmelze wurde anschließend im Einschneckenkühlextruder auf die Schäumtemperatur von 110 - 135°C gekühlt und durch eine 300 mm breite Schlitzdüse extrudiert und zwischen einem aus zwei Platten bestehenden Kalibrator aufgeschäumt.

Additive, Treibmittelzusammensetzung und Eigenschaften der Beispiele und Vergleichsversuche sind in der Tabelle 1 zusammengestellt. Bei den Treibmittelanteilen handelt es sich um Gewichtsteile, die zu den 100 Anteilen der Polymerschmelze aus Polystrol und gegebenenfalls Additiven zusätzlich zudosiert wurden.

### Vergleichsversuche V1 - V4 und Beispiele 1 - 9

Bei den Vergleichsversuche V1 - V4 und Beispielen 1 - 9 wurden 3,3 Gew.-%, bezogen auf Polystyrol, des 46 Gew.-%igen HBCD-Flammschutzbatches eingesetzt.

Vergleichsversuch 1 zeigt einen Versuch ohne Verwendung von HFO. Die Wärmeleitfähigkeit der Schaumstoffplatte ist entsprechend hoch.

Die Vergleichsversuche 3 und 4 entsprechen den Versuchen 11 und 13 der WO 2010/088320.

Überraschenderweise wurde gefunden, dass kleine Mengen HFO zu einer überproportionalen Reduktion der Wärmeleitfähigkeit führen. Der Vergleich von Beispiel 2 mit Vergleichsbeispiel 2 zeigt, dass der Austausch von 2,7 % HFO gegen 0,8% 1-Butan zu Schaumstoffplatten mit einer vergleichbaren Wärmeleitfähigkeit führt.

### Beispiele 10 - 13

In den Beispielen 10 - 13 wurden jeweils 5,0 Gew.-% eines Flammschutzbatches mit 38 Gew.-% eines bromhaltigen, polymeren Flammschutzmittels, jeweils bezogen auf Polystyrol, eingesetzt.

### Beispiele 14

In Beispiel 14 wurde 0,25 Gew.-% Graphit und 4,0 Gew.-% des 46 Gew.-%igen HBCD-Flammschutzbatches, jeweils bezogen auf Polystyrol, eingesetzt.

**Tabelle 1:**

| | Additive [Gew.-%] | | Treibmittel [Gewichtsanteil auf 100 Gewichtsteile Polystyrolschmelze incl. Additiven] | | | | | | | Schau mstoffeigenschaften | | |
|---|---|---|---|---|---|---|---|---|---|---|---|---|
| Beispiel | Flamm schutz | Graphit | HFO 1234ze | HFO 1336 mzz-Z | Ethanol | Aceton | CO₂ | I-Butan | Cyclopentan | WLF (10°C) [mW/mK] | Dichte [kg/m³] | Brand-Test B2* |
| V1 | HBCD | | | | 3,3 | | 3,3 | | | 34,7 | 32,5 | ja |
| V2 | HBCD | | 8,0 | | 2,5 | | | | | 29,0 | 43,0 | ja |
| V3 | HBCD | | 7,1 | | 1,8 | | | | | | 50,7 | ja |
| V4 | HBCD | | 5,0 | | | | | | 4,0 | | 40,2 | nein |
| 1 | HBCD | | 5,3 | | 2,7 | | 1,1 | | | 31,6 | 36,2 | ja |
| 2 | HBCD | | 5,3 | | 2,7 | | | 0,8 | | 29,1 | 36,7 | ja |
| 3 | HBCD | | 5,3 | | 3,3 | | | 0,8 | | 29,5 | 34,6 | ja |
| 4 | HBCD | | 4,0 | | 2,7 | | 0,8 | 0,8 | | 30,8 | 35,6 | ja |
| 5 | HBCD | | 5,3 | | | 1,8 | | 0,8 | | 29,2 | 37,4 | ja |
| 6 | HBCD | | 4,0 | | | 1,8 | 0,8 | 0,8 | | 30,7 | 36,3 | ja |
| 7 | HBCD | | 5,3 | | 2,7 | | | | 1,3 | 28,9 | 35,9 | ja |
| 8 | HBCD | | 4,0 | | 2,7 | | 0,8 | | 1,3 | 30,8 | 35,5 | ja |
| 9 | HBCD | | 4,0 | 1,5 | 2,7 | | | 0,8 | | 28,6 | 36,2 | ja |
| 10 | PBr | | 5,3 | | 2,7 | | | 0,8 | | 29,0 | 36,3 | ja |
| 11 | PBr | | 4,0 | | 2,7 | | 0,8 | 0,8 | | 30,7 | 35,7 | ja |
| 12 | PBr | | 5,3 | | 2,7 | | | | 1,3 | 28,9 | 35,7 | ja |
| 13 | PBr | | 5,3 | | | 1,8 | | 0,8 | | 29,1 | 37,9 | ja |
| 14 | HBCD | 0,25 | 4,0 | | 2,7 | | 0,8 | 0,8 | | 30,2 | 37,3 | ja |

## Patentansprüche

1. Verfahren zur Herstellung von Schaumstoffplatten mit einer Dichte im Bereich von von 20 bis 45 kg/m³ umfassend die Stufen:
a. Erzeugen einer Polymerschmelze aus einem Styrolpolymeren oder Mischungen von Styrolpolymeren,
b. Einbringen von 0 bis 5 Gew.-%, bezogen auf die Polymerschmelze, eines IR-Absorbers und 0 bis 10 Gew.-%, bezogen auf die Polymerschmelze, einer organischen Bromverbindung als Flammschutzmittel, sowie gegebenenfalls weiteren Zusatzstoffen, wie Nukleierungsmittel oder Weichmacher,
c. Einbringen von 1 bis 12 Gewichtsanteilen pro 100 Gewichtteile der in Stufe (a) und (b) erzeugten Polymerschmelze einer Treibmittelmischung, welches aus 5 bis 70 Gew.-% eines oder mehrerer Hydrofluorolefine und 95 bis 30 Gew.-% eines oder mehrerer Cotreibmittel besteht, zur Ausbildung einer schäumbaren Schmelze,
d. Extrusion der schäumbaren Schmelze in einen Bereich niedrigeren Drucks unter Aufschäumen zu dem Extrusionsschaumstoff.

2. Verfahren nach Anspruch 1, **dadurch gekennzeichnet, dass** als Cotreibmittel Ethanol, Aceton, Kohlendioxid, Alkane, Cycloalkane, Fluorchloralkane, Methylformiat, Wasser oder Mischungen davon eingesetzt werden.

3. Verfahren nach Anspruch 1 oder 2, **dadurch gekennzeichnet, dass** in Stufe (c) als Treibmittelmischung
(1) 0,5 bis 10 Gewichtsteile Hydroflourolefine,
(2) 0,5 bis 10 Gewichtsteile Ethanol, Aceton, Kohlendioxid oder Mischungen davon,
(3) 0 bis 2 Gewichtsteile C₁-C₅ Alkane oder Cylcoalkane,
jeweils bezogen auf 100 Gewichtsteile der in Stufe (a) und (b) erzeugten Polymerschmelze, eingebracht werden.

4. Verfahren nach einem der Ansprüche 1 bis 3, **dadurch gekennzeichnet, dass** in Stufe (c) als Treibmittelmischung
(1) 3 bis 5,5 Gewichtsteile Hydroflourolefine,
(2) 1,5 bis 3,5 Gewichtsteile Ethanol, Aceton, Kohlendioxid oder Mischungen davon,
(3) 0,1 bis 1,0 Gewichtsteile C₁-C₅ Alkane oder Cylcoalkane,
jeweils bezogen auf 100 Gewichtsteile der in Stufe (a) und (b) erzeugten Polymerschmelze, eingebracht werden.

5. Verfahren nach einem der Ansprüche 1 bis 4, **dadurch gekennzeichnet, dass** als Hydroflourolefine HFO-1243zf, (cis/trans)-HFO-1234ze, HFO-1234yf, and (E/Z)-HFO-1225ye, HFO-1345zfc, HFO-1336mzz-Z, HFO-1447fz, HFO-1438mzz-E oder Mischungen davon eingesetzt werden.

6. Verfahren nach einem der Ansprüche 1 bis 5, **dadurch gekennzeichnet, dass** als IR-Absorber 0,1 bis 2 Gew.-% Graphit, bezogen auf die Polymerschmelze, eingesetzt werden.

7. Verfahren nach einem der Ansprüche 1 bis 7, **dadurch gekennzeichnet, dass** als Flammschutzmittel 0,5 bis 5 Gew.-%, bezogen auf die Polymerschmelze, einer organischen Bromverbindungen mit einem Bromgehalt im Bereich von 60 bis 80 Gew.-%, eingesetzt werden.
